# EUROPEAN PATENT APPLICATION

(11) **EP 1 284 556 A1**
(43) Date of publication of application: **19.02.2003**
(21) Application number: 01810793.8
(22) Date of filing: 17.08.2001
(51) Int. Cl.: H04L 12/403

(54) **A method for initializing a control system and a control system**

(71) Applicant: SAIA-Burgess Murten AG, 3280 Murten (CH)
(72) Inventor: Brügger, Philippe, 1791 Courtaman (CH)
(74) Representative: AMMANN INGENIEURS-CONSEILS EN PROPRIETE INTELLECTUELLE SA BERNE

(57) **Abstract**

A method for initializing a control system and a control system. The control system comprises a master unit (11), a plurality of slave units (20A-20D) which are connected to the master unit (11) by means of a bus (25) and a divider circuit which comprises a series connection of electrical components (40A-40C). The electrical components (40A-40C) are adapted to cause a voltage drop so that different voltages are available at a plurality of points (36A-36C). Each of the slave units (20A-20D) is connected to one of said points (36A-36C) and comprises means (41A-41C) for generating a provisional address which corresponds to the voltage amplitude at said point (36A-36C), a first readable storing element (42A-42C) for storing a provisional address and a second readable storing element (43A-43C) for storing a definitive address of the respective slave unit (20A-20D). The method and the control system allow an assignment of unique addresses to the slave units (20A-20D).

## Description

The present invention relates to a method for initializing a control system comprising a master unit and a plurality of slave units. In particular, the present invention relates to a method for assigning a unique address to each one of said plurality of slave units. The present invention relates further to a control system comprising a master unit and a plurality of slave units.

Control systems of the kind used for instance for air-conditioning in automobiles comprise a master unit which communicates by means of a bus with a plurality of slave units such as actuators or sensors.

In order to enable communication, each slave unit has to be identified by the master unit. One possibility of identification is to assign a unique address to each slave unit when initializing the control system.

This task may be rather challenging when the control system comprises a plurality of slave units. An air-conditioning control system e. g. may include more than 16 actuators. Generally, a need exists for a simple, but reliable method for initializing such a control system.

US-Patent 6,166,653 describes a method for assigning unique addresses to each generic node in a distributed control system. A voltage and a current are successively applied to the communication bus and a reference voltage and a distance voltage proportional to its distance along the communication bus are stored. A unique address is assigned to each generic node on the basis of the distance information. Since this distance information depends on the resistance value per unit length of the communication bus, the length of each communication bus segment between two nodes must be greater than a minimum value in order that a discernible and distinct distance voltage is available for each node. Furthermore, the method according to US-Patent 6,166,653 requires a correcting step and this increases its complexity.

An aim of the present invention is therefore to provide a reliable method for initializing a control system which has not the disadvantages described above. Another aim of the present invention is to provide an improved control system.

According to the invention the first aim mentioned above is achieved with a method as defined by claim 1. The second aim mentioned above is achieved with a control system as defined by claim 6. The subclaims define preferred embodiments of the invention.

The main advantage of the method and control system according to the invention are their reduced complexity, their enhanced reliability and their lower cost.

Other advantages obtainable with the method and the control system according the invention can be summarized as follows:
(a) their aptitude to use slave units of the same type,
(b) a simplification of the assembling and mounting,
(c) a simplified replacement of slave units,
(d) their aptitude to use a master unit of an existing control system as it is,
(e) simplified production, storage, and handling,
(f) free choice of the length of the bus segment between neighboring nodes,
(g) a simplified and robust operation which is adapted to compensate for possible imperfections in the control system which originate e. g. from temperature changes.

Examples of embodiments of the method and control system according to the invention are described below with reference to the accompanying figures wherein:
Fig. 1 shows schematically a control system comprising a master unit, a plurality of slave units and a bus;
Fig. 2 shows schematically a control system according to the invention,
Fig. 3 shows the different voltage amplitudes assigned to the master unit and slave units of Fig. 2, and
Fig. 4 shows in a flow chart a method for initializing the control system of Fig. 2.

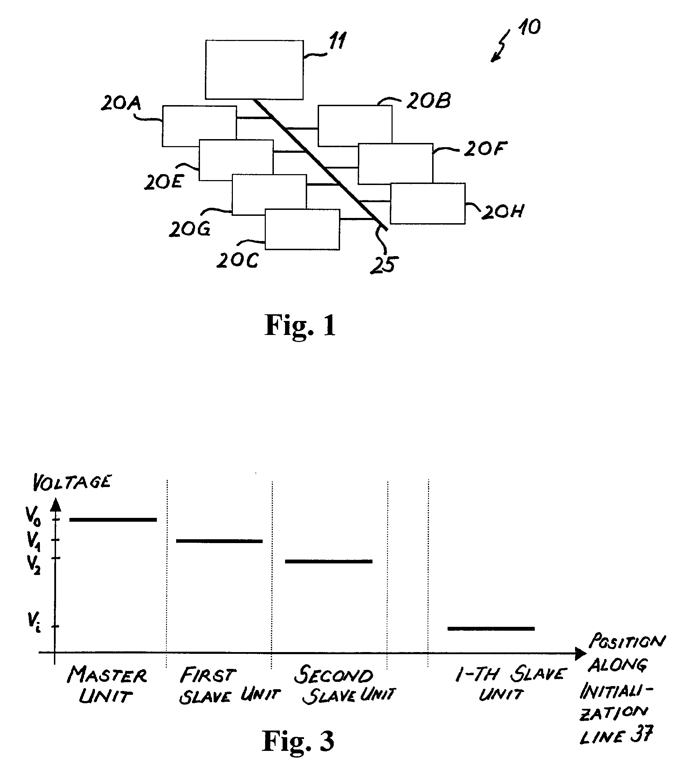

Fig. 1 shows schematically a control system 10 comprising a master unit 11 and a plurality of slave units 20A-20C, 20E-20H. The master unit 11 may be e. g. an electronic control unit, a microprocessor or other means having a central processing unit. The slave units 20A-20C, 20E-20H may be sensors, actuators, electric stepper motors, switches or other electrical or electromechanical devices.

The control system 10 is by way of example an air conditioning system or another subsystem (e. g. for the control of airbag operation) which is used in vehicles such as automobiles and may contain more than 16 actuators for controlling the operation of a ventilator, valves or other components of the vehicle.

The master unit 11 and slave units 20A-20C, 20E-20H are connected to a common bus 25. The length of the bus segment between neighboring nodes can be chosen as long as desirable. The master unit 11 controls the slave units 20A-20C, 20E-20H by sending control signals containing e. g. commands, data and addresses to the slave units 20A-20C, 20E-20H and by receiving signals emitted by the slave units 20A-20C, 20E-20H in response to the control signals. In order to enable communication by means of the bus 25, each slave unit 20A-20C, 20E-20H has to be identified by the master unit 11. This is achieved e. g. by assigning a unique address to each slave unit 20A-20C, 20E-20H in an initialization step.

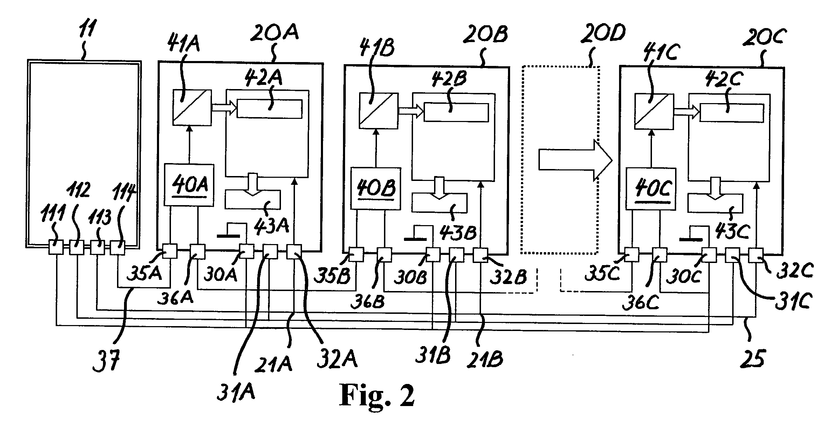

Fig. 2 shows one embodiment of the control system according to the invention in more detail. The control system comprises the master unit 11 and a plurality of slave units 20A-20D, which are to be assigned with a unique address. The dotted square 20D shown in Fig. 2 may contain further slave units, so that the total number of slave units 20A-20D is N.

In one embodiment the slave units 20A-20D are of the same type. This has the advantage that the slave units 20A-20D are easily interchangeable. Furthermore, the manufacturer can produce one type of slave units for a particular control system and can refrain from tagging each slave unit e. g. by uniquely configuring parts of the slave unit.

In a further embodiment the master unit 11 is part of another existing control system, which is e. g. part of a vehicle, and is used as it is. As is explained further below, the method for initializing the control system according to the invention is applicable to a large variety of master units.

The slave units 20A-20D are connected to different nodes 21A-21B of a bus 25, which allows for a bi-directional communication between the master unit 11 and slave units 20A-20D. The master unit 11 comprises a first lead 111 and a second lead 112 for the power supply of the slave units 20A-20D, a bus lead 113 for the bus 25 and an initialization lead 114 for the initialization of the control system.

The power supply of the control system is provided by an external power supply unit, such as a battery (not shown in Fig. 2), which is connected to the master unit 11, so that by way of example the first lead 111 is on ground and the second lead 112 has a predetermined voltage.

As explained further below, during the initialization of the control system a voltage V0 is applied to the initialization lead 114.

Electrical power is supplied to each slave unit 20A-20D by means of the first lead 111 and second lead 112 of the master unit 11. For this purpose, each of the slave units 20A-20D comprises a first lead 30A-30C which is connected with the first lead 111 of the master unit 11 and a second lead 31A-31C which is connected with the second lead 112 of the master unit 11. Each slave unit 20A-20D comprises further a bus lead 32A-32C which is connected with the bus lead 113 of the master unit 11.

As shown in Fig. 2, each slave unit 20A-20D comprises an input initialization lead 35A-35C and an output initialization lead 36A-36C. The input initialization leads 35A-35C and output initialization leads 36A-36C are connected in series by means of an initialization line 37. The input initialization lead 35A of the first slave unit 20A is connected with the initialization lead 114 of the master unit 11. In one embodiment the output initialization lead 36C of the last slave unit 20C and its first lead 30C for receiving power supply are on ground (0 V voltage level).

The input initialization lead 35A-35C and output initialization lead 36A-36C of each slave unit 20A-20D is connected with an electrical component 40A-40C which is adapted to cause a voltage drop across the respective input initialization lead 35A-35C and output initialization lead 36A-36C of the slave units 20A-20D. In a preferred embodiment each electrical component 40A-40C is a resistor with a predetermined resistance. In another preferred embodiment each electrical component 40A-40C is part of the respective slave unit 20A-20C.

As can be appreciated from Fig. 2, the slave units 20A-20C are connected to the electrical components 40A-40C, so that a voltage divider circuit is constituted which comprises a series connection of electrical components 40A-40C and which provides different voltages at a plurality of points of the voltage divider circuit.

Each of the slave units 20A-20D is connected with one of the points of the voltage divider circuit, e. g. at the input initialization lead 36A-36C, so that a different voltage amplitude is obtainable at each slave unit 20A-20D, which allows a unique assignment of an address as explained further below.

In the following we denote the different voltage amplitudes by V0, V1, ..., VN, where V0 is the voltage amplitude obtainable at the initialization lead 114 of the master unit 11 and Vi, i=1...N, is the voltage amplitude obtainable at the output initialization lead of the i-th slave unit. N denotes the total number of slave units.

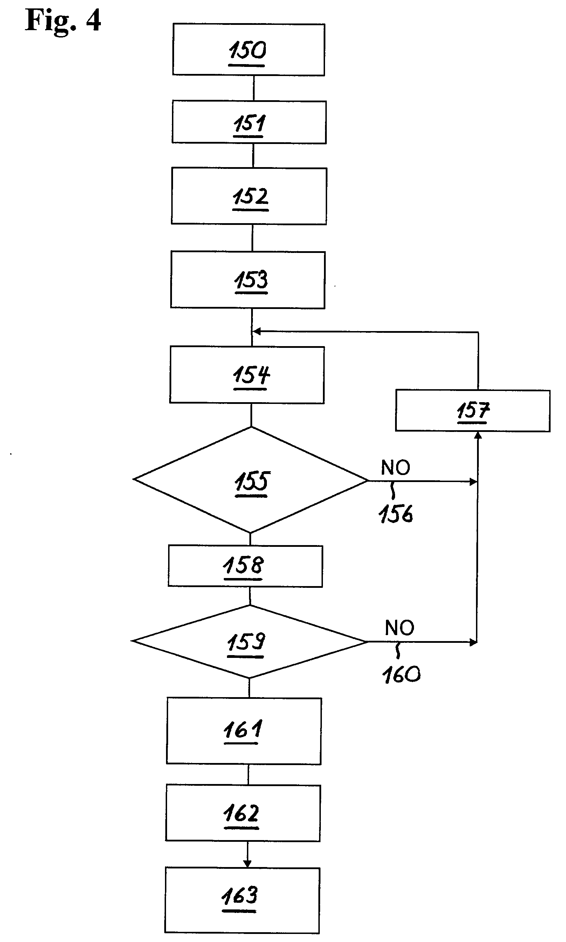

Fig. 3 shows the different voltage amplitudes V0, V1, V2, Vi, which are available at the master unit 11, the first 20A, second 20B and i-th slave unit, respectively. In one embodiment V0 is provided by a battery and has e. g. the value of 12 V. The difference between subsequent voltage amplitudes, Vi-Vk with k=i+1, is given by the voltage drop across the corresponding electrical component 40A-40C.

In a preferred embodiment each of the voltage drops is larger than 200 mV. Since the voltages are relatively high, the initialization process is robust, so that possible imperfections in the control system, which originate e. g. from temperature changes or leakage currents, are compensated without taking further measures.

In a further preferred embodiment each electrical component 40A-40C has the same resistance, so that the voltage drop is inversely proportional to the number of slave units 20A-20D. By way of example the output initialization lead 36C of the last slave unit 20C is e. g. on ground, so that Vi-Vk=V0/N with k=i+1, i=0,1,2,...,N-1.

Fig. 2 also illustrates that each slave unit 20A-20D has an analog-to-digital converter (A/D converter) 41A-41C, which is adapted to convert the corresponding voltage amplitude V1,...,VN into a digital value. Each slave unit 20A-20D contains further a memory 42A-42C as a first readable storing element, which is e. g. a random access memory (RAM), and a second readable storing element 43A-43C which constitutes a non-volatile memory being e. g. an electrically erasable programmable read only memory (EEPROM).

The first readable storing element 42A-42C is adapted to receive the digital value provided by the A/D converter 41A-41C and to store this value as a provisional address of the respective slave unit. Since the voltage amplitudes V1, V2,..., VN are different from each other, also the provisional addresses are different for each slave unit 20A-20D. For generating a unique provisional address, it is sufficient to determine the voltage amplitude of the respective slave unit 20A-20D, such that the provisional addresses corresponds exclusively to V1, V2,..., VN.

Each of the first readable storing element 42A-42C is connected to the bus 25, in order to be able to send the provisional addresses to the master unit 11 in the initialization process. The master unit 11 is adapted to receive all provisional addresses, to arrange them in a specific order which corresponds to the order of the slave units 20A-20D in the series connection, and to determine a definitive address which is unique to each slave unit 20A-20D.

In order to assign each slave unit 20A-20D with the definitive address, the master unit 11 can send information on the definitive addresses via the bus 25 to the respective slave unit 20A-20D, which is adapted to store its definitive address in its second readable storing element 41A-43C.

Fig. 4 illustrates a flow chart of the method according to the invention to initialize the control system of Fig. 2. The method for initializing a control system comprises the following steps:
150: the slave units 20A-20D are connected in series at their input initialization leads 35A-35C and output initialization leads 36A-36C, and connected to the bus 25 for communication with the master unit 11;
151: the control system is powered up and a predetermined voltage is applied across e. g. the input initialization lead 35A of the first slave unit 20A and the output initialization lead 36C of the last slave unit 20C; the master unit 11 is set to the identify mode;
152: the master unit 11 sends a signal to all slave units 20A-20D in order to signal them the start of the initialization process;
153: the A/D converter 41A-41C of each slave unit 20A-20D reads the voltage amplitude Vi corresponding to the point to which the respective slave unit is connected, and converts Vi into a digital value, which the memory 42A-42C of the respective slave unit 20A-20D receives to store it as a provisional address;
154: the master unit 11 successively interrogates each slave units 20A-20D by requesting an answer of a slave unit having the provisional address Aj;
155: the master unit 11 checks whether it has received an answer of slave unit having the provisional address Aj;
156: if the master 11 does not have received an answer from a slave unit having the provisional address Aj, then
157: the master unit 11 rises the address Aj by one and goes to step 154;
158: if the master 11 has received an answer from a slave unit having the provisional address Aj, the master unit stores the address Aj as valid in its memory;
159: the master unit 11 checks whether all possible addresses have been interrogated;
160: if this is not the case, then the master unit 11 rises the address last interrogated by one according to step 157 and goes to step 154;
161: if all possible addresses have been interrogated the master unit 11 determines the definitive addresses based on the valid addresses stored in its memory and sends the definitive addresses to the slave units 20A-20D according to their provisional addresses;
162: each slave unit 20A-20D stores the respective definitive address in its non-volatile memory 43A-43C, which is preferably part of the respective slave unit 20A-20C;
163: the initialization process is terminated and the master unit 11 is set into the normal mode, in which the master unit 11 can communicate with the slave units 20A-20D using the definitive addresses.

In a preferred embodiment of the method the master unit 11 is programmed before initialization, such that it knows how many slave units are connected to its bus 25. This has the advantage that the master unit 11, after having interrogated each of the slave units by successively calling a plurality of addresses, can count the number of slave units which have responded. If this number differs from the actual number of slave units 20A-20D connected to the bus 25, the master unit 11 can signal to the user that one or more slave units do not operate properly.

The method according to the invention has the particular advantage that a malfunctioning control system can readily be repaired. In case one or more slave units 20A-20D are broken, they are replaced by new ones and the initialization process is performed by the master unit 11 to reconfigure the control system.

Although preferred embodiments of the invention have been described above using specific terms, such description is for illustrative purposes only, and it is to be understood that changes and variations may be made without departing from the spirit or scope of the claims of this patent application.

### List of reference numbers

- 10: control system
- 11: master unit
- 20A: first slave unit in the series connection
- 20B: second slave unit in the series connection
- 20C: last slave unit in the series connection
- 20D: a plurality of slave units
- 20E-20H: further slave units
- 21A-21B: node of the bus to which slave units are connected to
- 25: bus
- 30A-30C: first lead of slave units for the power supply
- 31A-31C: second lead of slave units for the power supply
- 32A-32C: lead of slave units for bus
- 35A-35C: input initialization lead of slave units
- 36A-36C: output initialization lead of slave units
- 37: initialization line
- 40A-40C: electrical component with predetermined resistance
- 41A-41C: analog-to-digital converter
- 42A-42C: first readable storing element memory of slave units, e. g. RAM
- 43A-43C: second readable storing element of slave units, e. g. EEPROM
- 111: first lead of master unit for the power supply
- 112: second lead of master unit for the power supply
- 113: lead of master unit for bus
- 114: initialization lead of master unit
- 150-163: different steps of the initialization method as shown in Fig. 4

## Claims

1. A method for initializing a control system, said control system having a master unit (11), a plurality of slave units (20A-20D), and a bus (25) to which the master unit (11) and the slave units (20A-20D) are connected, each of the slave units (20A-20D) having a readable storing element (42A-42C), the method comprising the steps of:
(a) applying a predetermined voltage to a voltage divider circuit comprising a series connection of electrical components (40A-40C) each of which is adapted to cause a voltage drop so that different voltages are available at a plurality of points (36A-36C) of said voltage divider circuit, each of said slave units (20A-20D) being connected to one of said points (36A-36C),
(b) storing in said readable storing element (42A-42C) of each slave unit (20A-20D) a value which corresponds to the voltage amplitude at the point (36A-36C) to which the respective slave unit (20A-20D) is connected to, said value defining a provisional address of the respective slave unit (20A-20D),
(c) interrogating each of the slave units (20A-20D) by means of the master unit (11), which for this purpose calls a plurality of addresses which include all provisional addresses of said slave units (20A-20D), and
(d) assigning a specific definitive address to each of said slave units (20A-20D) by means of said master unit (11), said definitive address being based on the provisional addresses.

2. The method according to claim 1, wherein each of said provisional address is exclusively based on the voltage amplitude at the point (36A-36C) to which the respective slave unit (20A-20D) is connected to.

3. The method according to claim 1 or 2, wherein the step of calling a plurality of addresses is performed successively by means of the master unit (11).

4. The method according to any of claims 1 to 3, further comprising the step of performing an analog-to-digital conversion of the voltage amplitude at said point (36A-36C) to which each slave unit (20A-20D) is connected in order to provide a digital value.

5. The method according to any of claims 1 to 4, further comprising the step of storing the definitive address of the respective slave unit (20A-20D) in a further storing element (43A-43C) which is part of the respective slave unit (20A-20D).

6. A control system comprising
(a) a master unit (11),
(b) a plurality of slave units (20A-20D) which are connected to the master unit (11) by means of a bus (25), each of the slave units (20A-20D) comprising a first readable storing element (42A-42C) for storing a provisional address and a second readable storing element (43A-43C) for storing a definitive address of the slave unit (20A-20D), and
(c) a divider circuit comprising a series connection of electrical components (40A-40C) each of which is adapted to cause a voltage drop so that different voltages are available at a plurality of points (36A-36C) of said voltage divider circuit, each of said slave units (20A-20D) being connected to one of said points (36A-36C) and comprises means (41A-41C) for generating a provisional address which corresponds to the voltage amplitude at said point (36A-36C) to which the slave unit (20A-20D) is connected to.

7. A control system according to claim 6, wherein each of said provisional addresses corresponds exclusively to the voltage amplitude at said point (36A-36C).

8. A control system according to claim 6 or 7, wherein each of said voltage drops is larger than 200 mV.

9. A control system according to any of claims 6 to 8, wherein said means (41A-41C) for generating a provisional address comprises an analog-to-digital converter (41A-41C) for converting the voltage amplitude at said point (36A-36C) to which said slave unit (20A-20D) is connected into a digital value.

10. A control system according to any of claims 6 to 9, wherein said electrical components (40A-40C) are part of said slave units (20A-20D).

11. A control system according to any of claims 6 to 10, wherein each of the slave units (20A-20D) is an actuator or a sensor.

12. A control system according to any of claims 6 to 11, wherein each of the slave units (20A-20D) is of the same type.

13. A control system according to any of claims 6 to 12, wherein said voltage drop is inversely proportional to the number of slave units (20A-20D).

14. A control system according to any of claims 6 to 13, wherein said master unit (11) is part of an existing control system and is used as it is.

15. The use of a control system according to any of claims 6 to 14 as part of a subsystem of a vehicle.
